# EUROPEAN PATENT APPLICATION

(11) **EP 2 574 561 A2**
(43) Date of publication of application: **03.04.2013**
(21) Application number: 12175109.3
(22) Date of filing: 05.07.2012
(51) Int. Cl.: B65B 61/28, B65B 9/213, A47J 31/06

(54) **Device for forming pouches made of a foil material from a flat strip of foil material, which pouches are filled with a product to be extracted, as well as such a pouch.**

(30) Priority: 27.09.2011 NL 2007480
(71) Applicant: Stas I.P. B.V., 5633 AD Eindhoven (NL)
(72) Inventor: Stas, Marinus Barbara Arnoldus Maria, 5527 GR HAPERT (NL); Cats, Petrus Martinus Maria, 5633 AD EINDHOVEN (NL)
(74) Representative: Algemeen Octrooi- en Merkenbureau

(57) **Abstract**

The invention relates to a device (1) for forming pouches made of a foil material from a flat strip of foil material (5), which pouches are filled with a product to be extracted, said device at least comprising supply means (100) for supplying the strip of foil material in a flat orientation around a tubular filling tube (110), first connecting means (160) cooperating with said tubular filling tube for connecting the free longitudinal edges of the flat strip of foil material together so as to obtain a tubular foil envelope, second connecting means (170a-170b) disposed near the outlet side (110b) of the filling tube for forming successive transverse connections in the tubular foil envelope in the transverse direction of the tubular foil envelope, filling means (140) disposed near the inlet side of the filling tube (110) for filling the tubular foil envelope with a particular amount of product to be extracted via the filling tube, as well as discharge means for discharging individual pouches filled with the product to be extracted from the device.

## Description

The invention relates to a device for forming pouches made of a foil material from a flat strip of foil material, which pouches are filled with a product to be extracted, said device at least comprising supply means for supplying the strip of foil material in a flat orientation around a tubular filling tube, first connecting means cooperating with said tubular filling tube for connecting the free longitudinal edges of the flat strip of foil material together so as to obtain a tubular foil envelope, second connecting means disposed near the outlet side of the filling tube for forming successive transverse connections in the tubular foil envelope in the transverse direction of the tubular foil envelope, filling means disposed near the inlet side of the filling tube for filling the tubular foil envelope with a particular amount of product to be extracted via the filling tube, as well as discharge means for discharging individual pouches filled with the product to be extracted from the device.

Using a device as described in the introduction, food products, in particular tea or coffee, can be packaged in a pouch made of a foil material in a quick, efficient and hygienically sound and controlled manner in a substantially automated process.

A drawback of such a mechanically produced pouch is that the seams that are formed in the foil material are not always sound. A pouch thus obtained having an unsound and possibly weak seam does not contribute to the shelf life of the product fit for consumption that is contained in the pouch. In addition to that, an unsound seam may lead to the product contained in the pouch causing contamination.

The object of the invention is to provide an improved device as described in the introduction by means of which pouches having a better and more reliable seal can be produced without there being a risk of perishing and/or undesirable spreading of the product from the pouch. In order to achieve that object, the device according to the invention is **characterised in that** the second connecting means cooperate with a rotation unit which is disposed downstream, seen in the direction of movement of the strip of foil material, and which is rotatably accommodated in the device for rotating the pouch thus created in the tubular foil envelope during the forming of a next transverse connection.

As a result, the seam is formed in the foil material by rotation or twisting, providing a sounder and more reliable connection and seal of the pouch. Because of this, the pouch is more suitable for being used in preparation devices, such as coffee machines, that are operated with a higher water pressure. Furthermore, the pouch is thus given a more spherical shape, which makes it easier to place the pouch in a holder and remove it therefrom after use.

According to another aspect of the device according to the invention, the rotation unit comprises clamping means for clamping down the first transverse connection of the pouch created in the tubular foil envelope during rotation. This ensures, inter alia, that the foil material is tightly retained during rotation, which makes it easier to manually remove the pouch thus created from the device.

According to a special aspect of the invention, in order to compensate for the decrease in length of the pouch caused by the constriction of the foil material near the seam to be formed during rotation, the rotary shaft of the rotation unit is slidably (in longitudinal direction) accommodated in the drive shaft of a motor.

The discharge means further comprise a cutting unit for cutting through the tubular foil envelope at each transverse connection for separating individual pouches filled with the product to be extracted.

According to one embodiment, in order to realise a flexible and controlled formation of the tube of foil material around the filling tube, a ring-shaped guide element is provided around the filling tube near the inlet side of the filling tube, between which filling tube and which guide element the flat strip of foil material can be passed.

If a granular product with which the pouches are to be filled is used, the filling means comprise a compacting element in a functional embodiment for compacting the amount of product to be extracted with which the tubular foil envelope is filled. Said compacting element can be passed through the tubular filling tube, so as to realise an adequate functional compacting in the pouch to be formed.

In a suitable embodiment, the foil material is a filtering material, in particular filter paper.

The invention also relates to a pouch made of a filtering material, which is filled with a product to be extracted, which pouch is formed from a tubular-shaped filtering material, wherein according to the invention the circumferential edge is bound together at at least one end by means of a sealing, clamping or binding technique, using a device according to the invention.

According to a further aspect, the pouch is provided with an additional sheet of a filtering material on at least one side.

The invention will now be explained in more detail with reference to a drawing, in which:
Figure 1 shows an embodiment of an assembly consisting of a holder and a pouch according to the invention;
Figures 2a-2c show a first embodiment of a pouch according to the invention;
Figure 3 shows a device for producing pouches filled with a product to be extracted.

For a better understanding of the invention, a detailed description will now be given in which corresponding parts bear the same reference numerals.

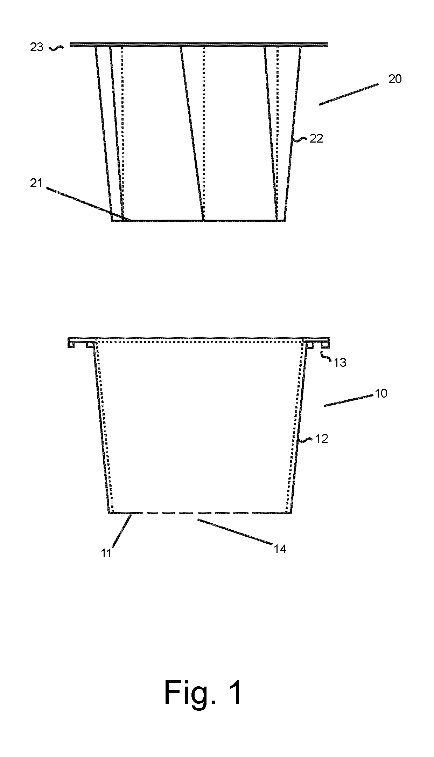

Reference numeral 1 in figure 1 denotes an assembly made up of a holder 10 and a pouch 20 filled with a product to be extracted. Such an assembly is used in particular in coffee-makers marketed under the trade name Nespresso®.

The assembly 1 is made up of a holder 10 and a pouch 20 which can be accommodated in the holder 10. The holder 10 is made up of a bottom part 11 and a side wall 12 circumferentially extending therefrom, as well as a peripheral edge 13 enabling a tight fit in a space intended for this purpose in the coffee-maker. At least the bottom 11 of the holder 10 is provided with one or more passages 14 for allowing passage of water or extract liquid under pressure.

The pouch 20 filled with the product to be extracted is made of a as a filter paper, and its shape or external dimension is substantially in conformity with the internal dimensions of the holder 10. Thus, the pouch 20 has a bottom part 21 as well as an upright circumferential side wall 22 which, upon being placed in the holder, closely abut against the bottom part 11 and the upright side wall 12 of the holder 10, respectively. The pouch 20 is also optionally provided with a circumferential side edge 23 which rests on the upright side edge 13 of the holder 10, thus effecting a proper tight fit in the coffee-maker.

The pouch 20 is pressed firmly into the holder 10 in use, whilst water is pressed through the assembly under high pressure via the openings 14 for preparing the extract, for example tea, cocoa or coffee.

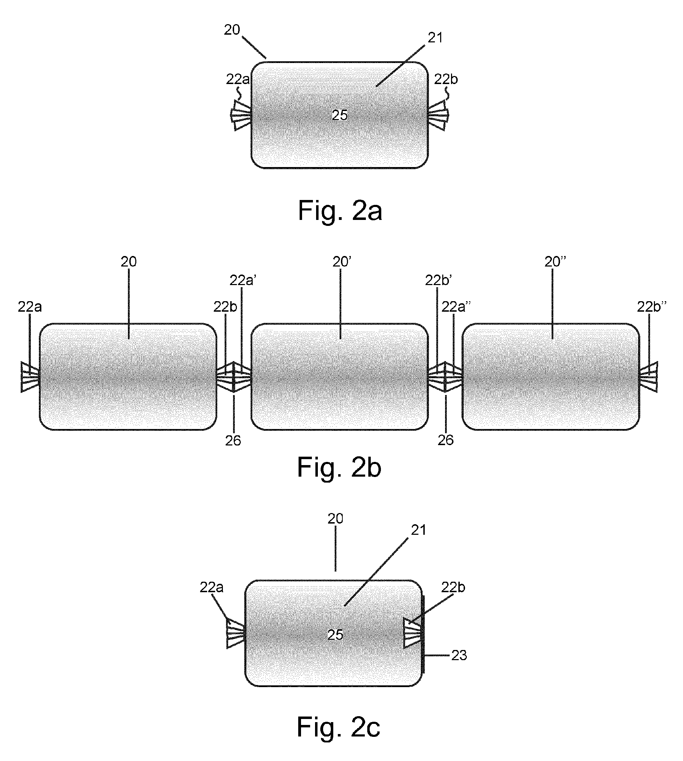

A pouch suitable for use in a holder according to the invention is shown in figures 2a and 2b.

The pouch 20 shown in figure 2a has an ellipsoid or spherical shape, it is made of a filter paper 21 and filled with a product 25 to be extracted, in particular coffee. A sleeve-like filtering material is used as the starting material for producing the pouch 20, which filtering material is closed on at least one side (indicated at 22a), by making a rotary motion and supplying heat, or, in an alternative embodiment, by merely clamping the filtering material together centrally and heating the same.

To that end the filtering material, for example a filter paper, may at least partially be provided with a material which melts or adheres when heat is added, thus realising a twisted-together or clamped seal 22a. The sleeve-like envelope 22 thus closed on one side 22a can subsequently be filled with a particular amount of product to be extracted (coffee, tea or cocoa), whereupon the partially filled sleeve-like envelope 21 is also closed on the side 22b, either by clamping or by twisting. Also in this case, the sealing of the pouch at the location indicated at 22b can be realised by using heat, which causes the filter paper to stick together.

On the other hand, the pouch can also be closed by means of a string or a metal clamping wire or other means.

For mechanically producing large numbers of such sausage-like pouches, as shown in figure 2b, in which the various pouches 20-20'-20" are produced in succession in one process or method step. Subsequently, individual pouches will be separated from the string of pouches thus formed by separating said pouches along the separation line 26 between the twisted-or bonded-together ends 22b-22a' (22b'-22a").

In figure 2c another embodiment of a pouch according to figure 2a is shown. In figure 2c the pouch is pressed together on at least one side, so that the pouch has a substantially flat side with the twisted or clamped or bonded end 22b moved inward. An additional sheet of filter paper 23 is placed against (adhered to) the thus flattened side, so that the side in question of the pouch is strong and thus better capable of resisting the pressure that is exerted on the filter paper during extraction of the pouch. The additional sheet of filter paper may have the same thickness as the filter paper 21 of which the pouch is made, or be thicker. Such an additional sheet of filter paper, 23 may also be provided on the other side (at the location of the end 22a), so that the pouch will take on a cylindrical shape.

As an alternative, an additional foil layer may be provided on one side or on both sides of the pouch, which foil layer may be an aluminium foil layer, for example. This, too, enables the pouch to better withstand any pressures exerted thereon during the extraction process and prevents the pouch from being damaged and extract from exiting the pouch during the extraction process.

Another embodiment of a punch according to the invention is shown in figure 1, in which the upper edge 23 is made of a thicker or a different kind of paper material so as to be better able to resist the pressure that is extracted on the filter paper during extraction of the pouch.

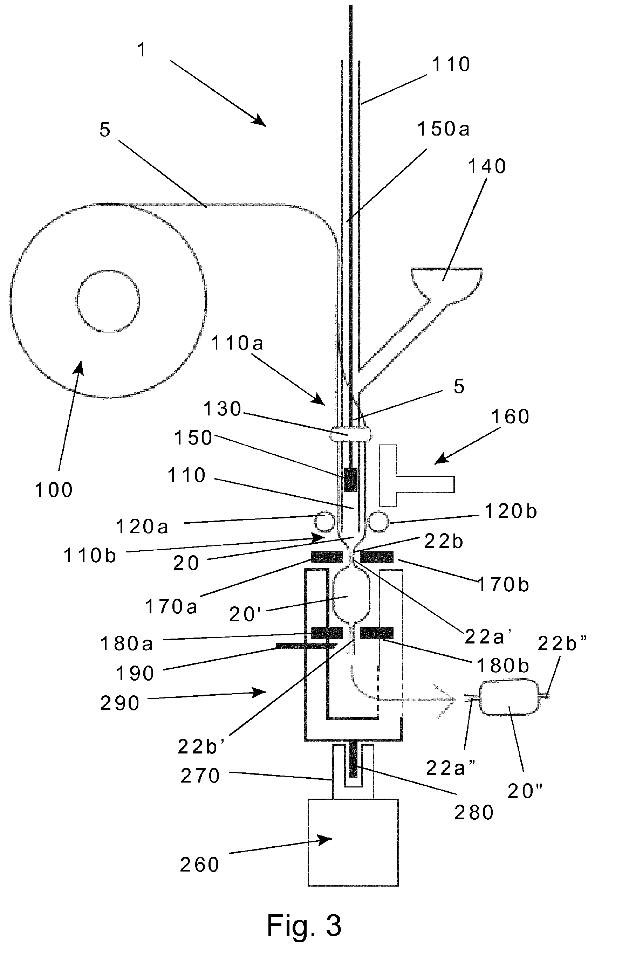

Figure 3 shows an embodiment of a device 1 for forming pouches made of a foil material from a flat strip of foil material, which pouches are filled with a product to be extracted.

The device 1 is provided with supply means 100, which are designed for supplying a strip of foil material 5 in a flat orientation around a tubular filling tube 110. The transport of the strip of foil material 5 through the device 1 is effected by conveying means 120a-120b in the form of driven roller, which are disposed near the outlet side 110b of the filling tube 110, for example. The driving rollers 120a-120b abut against the filling tube 110, thus moving the foil material 5 provided therebetween through the device.

The filling tube is preferably disposed vertically in the device 1 and cooperates with filling means 140 for feeding a product to be extracted, such as tea, cocoa or coffee, into the filling tube 110. A ring-shaped guide element 130 is arranged around the filling tube 110 around the vertically disposed filling tube 110 (near the inlet side 110a), at the location where the flat strip of foil material 5 is carried into the device 1. Present between the ring-shaped guide element 130 and the filling tube 110 is a small amount of play or a gap, through which the flat strip of foil material 5 can be passed.

Because of the ring shape of the guide 130, the strip of foil material 5 provided around the filling tube 110, near the inlet side 110a thereof, forms a tubular tube. Connecting means 160, which are disposed parallel to the filling tube 110, are capable of movement towards and away from the filling tube 110 and of connecting the two longitudinal sides of the tubular foil tube together, using heat or friction. In this way a tubular foil envelope can be realised.

Furthermore, second connecting means 170a-170b are disposed in the device, near the outlet side 110b of the filling tube 110, being arranged for providing successive transverse connections 22a-22b in the transverse direction of the now tubular foil envelope, likewise by means of heat or friction. The thus formed transverse connections 22b-22a each form one of the closed ends of a pouch 20-20'-20", etc, to be formed.

As shown in figure 3, reference numeral 20 indicates a semi-finished pouch, comprising a first (lower) transverse connection 22b formed by means of the second connecting means 170a-170b.

As also already explained with reference to figures 2a-2c, each semi-finished pouch 20 must be filled with the particular amount of product to be extracted (tea, cocoa, coffee, soup extract, etc). The product to be extracted is led into the filling tube 110 via the feed hopper 140, where it collects in the semi-finished pouch 20 at the location of the first transverse connection 22b that has been provided. The amount of products to be extracted can be compacted by means of a compacting element or stamp 150 which can move up and down in the filling tube 110. The compacting element 150 is to that end connected to a long compacting shaft 150a provided through the filling tube 110, which can be moved up and down by means not shown. When the compacting element 150 is moved upward past the inlet side 110a of the filling tube 110, the product to be extracted can be fed into the semi-finished pouch 20 via the feed hopper 140. After the product to be extracted has been supplied, it can be compacted in the semi-finished pouch 20 by moving the compacting element 150 downward.

After being filled (and optionally compacted), the conveyor rollers 120a-120b can move the filled semi-finished pouch 20 further through the device 1 to within the rotation unit 290, where the first transverse connection 22b-22b'-22b" is clamped down by the clamping means 180a-180b. The tubular foil envelope 5 is also clamped down by the second connecting means 170a-170b just above the amount of product to be extracted that has been fed into the semi-finished pouch 20.

In another embodiment, the filling of the semi-finished pouch 20 with the extract does not take place until the pouch has been moved into the rotation unit 290 by means of the conveyor rollers 120a-120b. In this embodiment, the semi-finished empty pouch 20 is clamped down with its closed end 22b by the clamping means 180a-180b, after which a predetermined amount of extract is fed into the semi-finished pouch 20 via the feed hopper 140 and the filling tube 110. After the amount of extract in the pouch 20 has been compacted by the compacting element 150, the tubular foil envelope 5 is clamped down by the second connecting means 170a-170b just above the amount of product to be extracted that has been fed into the semi-finished pouch 20.

After the two-sided clamping of the pouch 20 (20'-20") by the clamping means 180a-180b and the second connecting means 170a-170b, the rotation unit 290 is rotated together with the pouch 20' contained therein. Said rotation results in a constriction of the foil material 5 at the location of the second connecting means 170a-170b, whilst at the same time - using heat or friction - a constricted transverse connection 22a is provided in the foil material. As a result of said rotation, each seam is constricted as shown in figures 2a-2c.

In this way a string of sausage-like filled pouches 20"-20'-20-etc can be formed by means of the device 1, which pouches are separated from each other by successive constricted transverse connections 22a-22b.

The rotation of the rotation unit 290 is effected by means of a rotary motor 260 comprising a drive shaft 270, which engages the rotary shaft 280 of the rotation unit 290. The constriction of the foil material 5 at the location of the further seams 22a-22b etc by the second connecting means 170a-170b results in a decrease in length of the pouch 20 thus created. To compensate for said decrease in length, the rotary shaft 280 of the rotation unit 290 is slidably (in longitudinal direction) accommodated in the drive shaft 270 of the rotary motor 260.

Finally, the constricted transverse connections 22a-22b between successive pouches 20"-20'-20 can be cut through or separated by means of cutting means 190, so that individual separated pouches 20"-20'-20 are realised. As is clearly shown in figure 2b, each pouch 20"-20'-20 thus realised and filled with a particular amount of product to be extracted has two constricted, twisted, bonded or clamped ends 22b"-22a", 22b'-22a' and 22b-22a, respectively. Each pouch 20"-20'-20 separated by means of the cutting means 190 can subsequently be individually discharged to a packaging line (not explained in more detail).

## Claims

1. A device for forming pouches made of a foil material from a flat strip of foil material, which pouches are filled with a product to be extracted, said device at least comprising
supply means for supplying the strip of foil material in a flat orientation around a tubular filling tube,
first connecting means cooperating with said tubular filling tube for connecting the free longitudinal edges of the flat strip of foil material together so as to obtain a tubular foil envelope,
second connecting means disposed near the outlet side of the filling tube for forming successive transverse connections in the tubular foil envelope in the transverse direction of the tubular foil envelope,
filling means disposed near the inlet side of the filling tube for filling the tubular foil envelope with a particular amount of product to be extracted via the filling tube, as well as
discharge means for discharging individual pouches filled with the product to be extracted from the device, **characterised in that** the second connecting means cooperate with a rotation unit which is disposed downstream, seen in the direction of movement of the strip of foil material, and which is rotatably accommodated in the device for rotating the pouch thus created in the tubular foil envelope during the forming of a next transverse connection.

2. A device according to claim 1, **characterised in that** the rotation unit comprises clamping means for clamping down the first transverse connection of the pouch created in the tubular foil envelope during rotation.

3. A device according to claim 1 or 2, **characterised in that** the rotary shaft of the rotation unit is slidably (in longitudinal direction) accommodated in the drive shaft of a motor.

4. A device according to one or more of the preceding claims, **characterised in that** the discharge means comprise a cutting unit for cutting through the tubular foil envelope at each transverse connection for separating individual pouches filled with the product to be extracted.

5. A device according to one or more of the preceding claims, **characterised in that** a ring-shaped guide element is provided around the filling tube near the inlet side of the filling tube, between which filling tube and which guide element the flat strip of foil material can be passed.

6. A device according to one or more of the preceding claims, **characterised in that** the filling means comprise a compacting element for compacting the amount of product to be extracted with which the tubular foil envelope is filled.

7. A device according to claim 6, **characterised in that** the compacting element can be passed through the tubular filling tube.

8. A device according to one or more of the preceding claims, **characterised in that** the foil material is a filtering material, in particular filter paper.

9. A pouch made of a filtering material, which is filled with a product to be extracted, which pouch is formed from a tubular-shaped filtering material, wherein the circumferential edge is bound or twisted together at at least one end by means of a sealing, clamping or binding technique, using a device according to one or more of the preceding claims.

10. A pouch according to claim 9, **characterised in that** the pouch is provided with an additional sheet of a filtering material on at least one side thereof.
